(19) Europäisches Patentamt
European Patent Office
Office européen des brevets

(11) Veröffentlichungsnummer: **0 027 168**
**B1**

(12) # EUROPÄISCHE PATENTSCHRIFT

(45) Veröffentlichungstag der Patentschrift: **14.09.83**

(51) Int. Cl.$^3$: **G 01 C 11/02**

(21) Anmeldenummer: **80104996.6**

(22) Anmeldetag: **22.08.80**

(54) **Stereo-photogrammetrische Vorrichtung für Fluggeräte und Raumflugkörper zur Erzeugung einer digitalen Geländedarstellung.**

(30) Priorität: **09.10.79 DE 2940871**

(43) Veröffentlichungstag der Anmeldung: **22.04.81 Patentblatt 81/16**

(45) Bekanntmachung des Hinweises auf die Patenterteilung: **14.09.83 Patentblatt 83/37**

(84) Benannte Vertragsstaaten: **FR GB IT**

(56) Entgegenhaltungen:
**FR A 2 384 407**

**PHOTOGRAMMETRIC ENGINEERING, Band 18, Nr. 1, März 1952, Menasha, US, A.H. KATZ et al.: « Height measurements with the stereoscopic continuous strip camera », Seiten 53-62**

(73) Patentinhaber: **Messerschmitt-Bölkow-Blohm Gesellschaft mit beschränkter Haftung**
**Postfach 801109**
**D-8000 München 80 (DE)**

(72) Erfinder: **Hofmann, Otto, Dr.**
**Lerchenstrasse 4**
**D-8011 Kirchstockach (DE)**

**EP 0 027 168 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Stereo-photogrammetrische Vorrichtung für Fluggeräte und Raumflugkörper zur Erzeugung einer digitalen Geländedarstellung

Die Erfindung betrifft eine stereophotogrammetrische Vorrichtung für Fluggeräte und Raumflugkörper zur Erzeugung der Orientierungsdaten der Vorrichtung, des Flugkurses des Vorrichtungsträgers und einer digitalen Geländedarstellung unter Verwendung von drei quer zur Flugrichtung angeordneten Photohalbleitersensorzeilen A, B, C (Fig. 1b) und zugeordneter Optik zur fortlaufenden Abtastung des überflogenen Geländes.

Im Bereich der Erdbeobachtung aus dem Luft- und Weltraum ist es üblich, mittels sog. linear array CCD's als Sensor, die überflogene Erdoberfläche zeilenweise aufzunehmen. Bei den CCD's handelt es sich um bis zu 6 000 und mehr in Reihe angeordneter ladungsgekoppelter Elemente. Die ganze Reihe wird im rechten Winkel zur Flugbahn angeordnet und die einzelnen Elemente werden sukzessive elektronisch ausgelesen, siehe hierzu « Interavia » 12/1978, S. 1160. Dieses Verfahren hat den großen Vorteil, daß eine unmittelbare opto-elektronische Umsetzung der im Sensor erzeugten Signale in digitale Daten ermöglicht wird, so daß sowohl Speicherung auf Magnetband o. dgl. als auch Weiterverarbeitung in Rechenautomaten möglich ist. Mit schnellen Prozeßrechnern ist auch die Echtzeitauswertung ohne Zwischenspeicherung möglich. Bei der Aufnahme kann gleichzeitig die Bildkoordinate diskreter Bildpunkte und auch die Intensität der optischen Strahlung digital gemessen werden. Insgesamt ergibt sich mit der Aufnahmetechnik die Möglichkeit der direkten, vollautomatischen Rechnerverarbeitung, wobei die ermittelten Daten ohne weiteres per Telemetrie zu den Bodenstationen übertragen werden können. Diese Technik hat daher Eingang in Bereiche der Kartographie, Photogrammetrie, Navigation, Fernerkundung, militärischen Aufklärung usw. gefunden.

Nachteilig ist jedoch, daß die exakte geometrische Auswertung der aufgenommenen Bildstreifen bisher nicht möglich ist. Hierbei handelt es sich um einen dem Prinzip der Zeilenaufnahme selbst anhaftenden Mangel. Während bei der konventionellen photographischen Abbildung mit ihrer zentralperspektivischen Momentaufnahme eine exakte geometrische Zuordnung über die ganze Fläche gegeben ist, fehlt diese Zentralperspektive bei der Zeilenaufnahme bzw. ist diese auf die zentralperspektivische Geometrie einzelner Bildzeilen reduziert.

Jede Bildzeile innerhalb eines Bildstreifens ist einer eigenen, äußeren Orientierung zugeordnet, da sich der Sensorträger sowohl hinsichtlich seiner Position als auch seiner Neigungslage bewegt, wobei die Bewegungen nicht oder nur annähernd bekannt sind. Dieser Sachverhalt steht als Haupthindernis einer geometrischen Auswertung entgegen. Bisher ist zur Lösung des Problems im wesentlichen vorgeschlagen bzw. bekannt geworden, eine fortlaufende Messung der äußeren Orientierung mit externen Hilfsmitteln, wie Kreiselplattformen, Inertial-Verfahren usw., durchzuführen ; oder auch Entzerrungsverfahren unter Zuhilfenahme von Paßpunkten einzusetzen. Schließlich werden auch Versuche unternommen, die Fluglage aufgrund statistischer Voraussage zu ermitteln. Allen Methoden haftet als entscheidender Nachteil ihre Umständlichkeit und relative Aufwendigkeit an, sei es wegen des Erfordernisses zusätzlicher Instrumentierung, sei es wegen der Notwendigkeit manueller Zwischenprozesse oder auch wegen der erforderlichen Ermittlung zahlreicher Paßpunkte.

Aufgabe der Erfindung ist es, eine Vorrichtung der eingangs erwähnten Art zu schaffen, bei der allein aus den Aufnahmedaten der zeilenförmig angeordneten Halbleiter und anschließender vollautomatischer Bearbeitung die genannten Daten, wie u. a. eine verzerrungsfreie, digitale Geländedarstellung mit eindeutiger Koordinatenbestimmung erzeugbar sind.

Diese Aufgabe ist gemäß dem Kennzeichen des Anspruchs 1 gelöst.

Bereits aus der EP-A-0 026 637 ist eine Vorrichtung für die Aufnahme topographischer Daten eines Himmelskörpers wie der Erde bekanntgeworden (Stand der Technik nach Art. 54 (3) EPü), bei der drei quer zur Flugrichtung angeordnete Photohalbleitersensorzeilen verwendet werden. Allerdings ist nur die mittlere Sensorzeile in der geometrischen Vertikalen orientiert, während die beiden anderen Zeilen im gleichen Winkel nach vorne bzw. nach hinten orientiert sind. Nicht gelöst wird von der bekannten Vorrichtung das Problem des Folgebildanschlusses von Bildstreifen. Dieses Problem ist aber eines der drängendsten und schwierigsten in der modernen Photogrammetrie.

Verdienst der Erfindung ist es daher, daß ohne weitere Hilfsmittel eine vollautomatische, digitale, dreidimensionale Geländedarstellung und die Zuordnung entsprechender Strahlungs- bzw. Reflexionswerte möglich ist. Durch die große Zahl unabhängiger Zeilenanschlüsse tritt eine erhebliche Genauigkeitssteigerung gegenüber der bisherigen Bildtriangulation ein.

Die Erfindung ist anhand der Figuren näher erläutert. Es zeigen :

Figuren 1a, 1b einen Sensor mit drei Zeilen in Vordersicht und Draufsicht ;

Figuren 2a, 2b den Zeilenanschluß über der Flugbahn ;

Figur 3 Schnitt homologer Strahlen von Orientierungspunkten ;

Figur 4 die Ermittlung der Anfangsorientierung des Sensors im Flug.

Die Lösung der gestellten Aufgabe geht vom bekannten Prinzip der Aerotriangulation durch Folgebildanschluß aus. Dieser Folgebildanschluß beruht darauf, daß zentralperspektive Luftbilder mit etwa 60 % Überdeckung erzeugt werden und daß jedes Bild durch relative Orientierung an das vorausgehende Bild angeschlossen wird. Diese Hinzuorientierung geschieht derart, daß die Bildkoordinaten von jeweils mindestens fünf identischen Punkten benachbarter Bilder in beiden Bildern gemessen

werden. Über die Berechnung der Strahlenschnittpunkte lassen sich dann die Bildneigungen und die Position des Folgebildes in Bezug auf das vorausgehende Bild berechnen. Auf diese Weise kann man einen aus vielen Bildern aneinandergereihten Streifen erzeugen und auch dessen absolute Orientierung in einem übergeordneten Koordinatensystem, z. B. Gauss Krüger oder UTM, bestimmen, wenn wenigstens die Absolutlage eines Bildes, zumeist am Streifenanfang, in diesem System bekannt ist. Der Anwendung dieses Verfahrens auf den zeilenförmig erzeugten Bildstreifen steht bisher entgegen, daß der zentralperspektive Zusammenhang fehlt.

Diesem Mangel wird dadurch abgeholfen, daß man in der Bildebene drei Zeilen A, B, C als Sensor *10* parallel zueinander und quer zur Flugrichtung im Abstand der Bildbasis voneinander anordnet, Fig. 1a. Damit wird in den drei Zeilen A, B, C der exakte zentralperspektive geometrische Zusammenhang wieder hergestellt. Wählt man nun die Orientierungspunkte auf den Zeilen A, B, C, dann läßt sich das Prinzip des Folgebildanschlusses auch hier wieder anwenden.

Das bedeutet, daß man prinzipiell die relative Orientierung dieses Stereozeilenabtasters für jede einzelne Zeilenperiode berechnen kann, indem man die durch eine gewisse Zahl von Punkten, z. B. sechs definierten Strahlen einer Abtastperiode bzw. eines « Zeilenbildes » mit entsprechenden Bildpunktstrahlen von Zeilenbildern zum Schnitt bringt bzw. korreliert, die etwa eine Basislänge zurückliegen.

Die Fig. 2a, 2b zeigen dieses Prinzip, das sich grundsätzlich nicht vom zentralperspektiven Folgebildanschluß unterscheidet. Die Orientierungspunkte 1 bis 6 bei dem anzuschließenden Zeilenbild b (Folgeposition b) sind so verteilt, daß drei Punkte 1b, 3b, 5b auf der mittleren Zeile B und drei Punkte 2b, 4b, 6b auf der zurückschauenden Zeile C liegen. Die entsprechenden Punkte 1a bis 6a auf dem bzw. den um etwa eine Basislänge zurückliegenden Zeilenbildern liegen dort auf der mittleren Zeilenfolge B und der vorausschauenden Zeilenfolge A.

In der Fig. 3 ist der Schnitt homologer Strahlen des anzuschließenden, rechten Zeilenbildes mit zurückliegenden, linken Zeilenbildern, von denen eines als Bezugs-Zeilenbild gewählt wird, dargestellt. In vektorieller Schreibweise läßt sich diese Schnittbedingung mathematisch folgendermaßen darstellen :

$$(b - \Delta b_n) \cdot ((\lambda_{Ln} \mathcal{L}_n \mathcal{C}_{Ln}) \times (\lambda_R \mathfrak{R} \mathcal{C}_{Rn})) = \mathcal{O} \qquad (1)$$

Darin bedeuten :

$b$ Basisvektor zwischen dem neuen, rechten Zeilenbild und dem linken Bezugs-Zeilenbild.

$\Delta b_n$ Differenzvektor zwischen dem linken Bezugs-Zeilenbild und den anderen linken Zeilenbildern n.

$\lambda_{Ln}$ Skalare Vergrößerungsfaktoren der linken Zeilenbilder.

$\mathcal{L}_n$ Drehmatrizen der linken Zeilenbilder.

$\mathcal{C}_{Ln}$ Bildkoordinatenvektor der Orientierungspunkte der linken Zeilenbilder in Bezug auf das Bildkoordinatensystem.

$\lambda_R$ Skalarer Vergrößerungsfaktor des rechten Zeilenbildes.

$\mathfrak{R}$ Drehmatrix des rechten Zeilenbildes.

$\mathcal{C}_{Ln}$ Bildkoordinatenvektor der Orientierungspunkte im rechten Zeilenbild in Bezug auf das Bildkoordinatensystem.

Mit dieser Schnittbedingung (1) und räumlichen Rückwärtsschnitten zu bereits bekannten Geländepunkten werden die unbekannten Orientierungsparameter des rechten Zeilenbildes, nämlich die Drehmatrix $\mathfrak{R}$ mit ihren Drehparametern $\omega$, $\varphi$, $\kappa$ und der Basisvektor b mit seinen Komponenten $b_X$, $b_Y$, $b_Z$ bestimmt.

Erfolgt die Aufnahme mit einer Anordnung, bei der den Sensorzeilen jeweils ein eigenes Objektiv zugeordnet ist und ist die Orientierung zwischen den Objektiven und den Sensorzeilen bekannt, so ändert sich grundsätzlich nichts an diesem Verfahren.

Das Verfahren setzt voraus, daß am Anfang des Streifens zumindest über eine Basislänge für jedes Zeilenbild die Orientierung, d. h. die genauen Positionskoordinaten und Neigungen des Sensors *10* bekannt sind. Ist diese Startbedingung erfüllt, dann lassen sich theoretisch beliebig viele Zeilen hinzuorientieren und ein beliebig langer Bildstreifen, der sich an sich selbst orientiert, erzeugen. Zusätzlich kann man je nach den gestellten Genauigkeitsanforderungen mit Hilfe von wenigen Paßpunkten oder Paßpunktfeldern die Bildstreifen in bekannter Weise stützen und beliebig ausdehnen.

Sind nach diesem Verfahren erst einmal für jede Zeile die Orientierungsdaten, Position und Lage, berechnet, dann lassen sich diese Zeilen auf die Normallage reduzieren und ein exakt entzerrter Bildstreifen erzeugen. Bei der gewählten Anordnung des Sensors *10* mit drei Zeilen entstehen drei sich überdeckende Streifen. Durch räumlichen Vorwärtsschnitt lassen sich daraus die Geländekoordinaten X, Y, Z jedes Geländepunktes berechnen. Die bei diesem Verfahren notwendige Suche der Bildkoordinaten korrespondierender Punkte in den verschiedenen Zeilenbildern geschieht durch Korrelation. Dieses Verfahren beruht auf bekannten Methoden. Da die Zeilenbildpunkte ohne manuelle Zwischenprozesse dem Rechner unmittelbar zur Verfügung stehen, wird eine vollautomatische Auswertung ermöglicht. Neben dem Aufnahmegerät und dem Rechner ist für die graphische Wiedergabe des entzerrten Bildstreifens (Orthoprojektion) lediglich ein entsprechender Plotter erforderlich. Die Korrelation zugeordneter Bildpunkte verschiedener Zeilen A, B, C kann nicht nur mit einem einzigen Bildpunkt geschehen, sondern muß jeweils eine mehr oder weniger große Zone um diesen Orientierungspunkt erfassen, sonst

ist eine Korrelation, die ein Ähnlichkeitskriterium darstellt, nicht möglich. Das bedeutet, daß für die in dieser Zone liegenden Bildpunkte benachbarte Zeilen heranzuziehen sind. Die benachbarten Zeilen müssen zu diesem Zweck auf die zentralperspektive Geometrie der Bezugszeile transformiert werden. Dies ist nur möglich, wenn man ihre Orientierung kennt. Bei den zurückliegenden Nachbarzeilen ist diese Orientierung bekannt, bei den folgenden, noch nicht orientierten Zeilen, kann man wegen der unmittelbaren Nachbarschaft relativ genau extrapolieren und durch Iteration des gesamten Prozesses die Genauigkeit verbessern. Da die Zeilenfolge im Verhältnis zu Änderungen der äußeren Orientierung relativ hoch ist, erhält man für jede Zeilenorientierung und auch für die Korrelation relativ genaue Anfangswerte, so daß einerseits nur wenige Iterationen zu erwarten sind. Zum anderen muß man nicht jede Bildzeile nach diesem Verfahren orientieren, sondern man kann das in bestimmten Orientierungs-Intervallen tun. Die dazwischenliegenden Zeilenorientierungsparameter werden lediglich durch Interpolation bestimmt. Für die Korrelation ergeben sich insofern günstige Voraussetzungen, als in den Orientierungspunkten das Geländerelief bereits bekannt ist oder wegen der unmittelbaren Nachbarschaft des zuvor bestimmten Geländeabschnittes mit guter Näherung extrapoliert werden kann. Die Bildzonen um die Orientierungspunkte lassen sich daher unter Berücksichtigung des Geländereliefs und der Bildzeilenorientierung einwandfrei auf die horizontale Normallage reduzieren und korrelieren.

Die Orientierungspunkte jeder neu zu bestimmenden Kameraposition liegen exakt auf der mittleren Zeile B und der zurückschauenden Zeile C, wobei vorzugsweise eine überschüssige Zahl von Punkten gewählt wird, um durch Ausgleichung die Genauigkeit zu erhöhen und wobei die Lage dieser Punkte u. a. auch von Korrelationskriterien bestimmt wird.

Die korrespondierenden Bildpunkte auf den um eine Basislänge zurückliegenden Zeilenbildern liegen wegen der Höhenunterschiede des Geländereliefs und den von der Normallage abweichenden Kameralagen nicht auf der mittleren Zeile B und der vorausschauenden Zeile A eines einzigen Zeilenbildes, sondern auf den Zeilenbildern verschiedener mehr oder weniger benachbarter Positionen (Fig. 2a, 2b, 3). Die Orientierungsparameter dieser Zeilenbilder sind aber schon bekannt und können direkt in die Gleichung (1) eingesetzt werden.

Wie erwähnt, setzt dieses Verfahren am Anfang einen Vorspann von mindestens einer Basislänge voraus, innerhalb dessen die Absolutorientierung des Sensors *10* für jede Bildzeile bekannt ist oder ermittelt werden muß. Dies könnte durch externe Hilfsmittel wie Kreisel, Ortungs- und Navigationssysteme geschehen. Statt dessen ist vorgesehen, die Orientierungsdaten ebenfalls rein rechnerisch über ein als bekannt vorausgesetztes digitales Geländemodell zu bestimmen. Diese Lösung fügt sich organisch in den Prozeß ein, da hierbei zum großen Teil die gleichen Rechenmethoden und Formelapparate benützt werden, wie man sie für den Folge-Zeilenanschluß benützt. Dieses digitale Vorspann-Geländemodell ist hinsichtlich seiner Datenstruktur genau so aufgebaut, wie das durch die Aufnahme zu gewinnende Geländemodell. Es besteht aus einem das Geländerelief beschreibenden Punkthaufen, der regelmäßig oder unregelmäßig angeordnet ist und dessen digitale Komponenten jeweils die Geländekoordinaten X, Y (Lage) und Z (Höhe) sowie die Helligkeit des Punktes bilden. Dieses Geländemodell liegt bei der Auswertung in Form von auf Magnetband gespeicherten Daten vor.

Die Abtastung des Startgebietes mit dem Dreizeilen-Sensor gestattet, durch Korrelation von mindestens drei Bildpunkten mit drei entsprechenden Punkten des gespeicherten digitalen Geländemodells vermittels räumlichen Rückwärtseinschnittes die Position und Lage des Sensors *10* bzw. des Trägers in jedem Zeilenintervall zu bestimmen. Man kann auch in diesem Fall die Orientierungspunkte in einer regelmäßigen sechser- oder neuner-Anordnung wählen und durch Überbestimmung und Ausgleichung die Genauigkeit und Zuverlässigkeit verbessern, siehe Fig. 4. Für die Beschaffung der digitalen Geländedaten stehen geeignete Hilfsmittel zur Verfügung.

Jede Zeile wird an einer Zeile bzw. Zeilenfolge orientiert, die um ein ganzes Basisintervall zurückliegt. Dies bedeutet, daß die Fehlerfortpflanzung nicht schlechter ist als bei der konventionellen Aerotriangulation mit zentralperspektiven Bildern, wobei dort durch jeden Bildanschluß ein Streckenfortschritt von einem Basisintervall erzielt wird. Im Unterschied dazu werden im vorliegenden Fall die vielen, zwischen einem Basisintervall liegenden Zeilen unabhängig voneinander an Zeilen orientiert, die jeweils ein volles Basisintervall zurückliegen.

Die Streifentriangulation erfolgt also mit einer sehr großen Überbestimmung, siehe Fig. 2a, 2b. Diesen Sachverhalt kann man ausnützen und durch Ausgleichung eine stabilisierende Wirkung ausüben, so daß mit einer günstigen Fehlerfortpflanzung für einen Bildstreifen zu rechnen ist.

Durch die Benützung von Paßpunkten oder Punktfeldern in der Mitte und/oder am Ende des Streifens lassen sich in bekannter Weise die Genauigkeiten weiter erhöhen. Die Einschaltung derartiger Paßpunkte kann ebenfalls vollautomatisch geschehen, so daß das gesamte System homogen bleibt. Wie bereits erwähnt, lassen sich durch parallele Flugstreifen und Vermaschungen beliebig große Gebiete aufnehmen.

In einer weiteren Ausbildung dieser Vorrichtung und dieses Verfahrens kann es zur Kursbestimmung von Flugkörpern benützt werden, da die Orientierungsbestimmung der aufeinanderfolgenden Zeilenbilder identisch ist mit der Bestimmung der Neigungslage und Position des die Zeilenkamera tragenden Flugkörpers. Dies kann bei Speicherung sämtlicher Bilddaten nachträglich geschehen. Die Auswertung der Bilddaten, sowohl die Orientierungs- und Kursberechnung als auch die Ermittlung der digitalen Geländedaten kann aber mit einem geeigneten Prozeßrechner, ggf. einem Multiprozessor, auch

in Echtzeit geschehen. Dies hat den Vorteil, daß die gewünschten Daten (Flugkurs, Geländedaten) sofort zur Verfügung stehen und daß nicht sämtliche Bilddaten gespeichert werden müssen. Es genügt lediglich die Zwischenspeicherung der von den drei Zeilen A, B, C abgetasteten Daten für etwa eine Basislänge. Die Speicherung dieser relativ begrenzten Datenmenge erfolgt zweckmäßig in einem Halbleiterspeicher, zu dem der Echtzeitprozessor unmittelbaren Zugriff hat. Nach der Echtzeitrechnerauswertung werden die Original-Zeilensensordaten nicht mehr benötigt. Diese durchlaufen daher kontinuierlich den operationellen Halbleiterspeicher. Demgegenüber werden lediglich die ausgewerteten Daten (Orientierungsparameter, Flugkurs, Geländedaten) nach Bedarf angezeigt oder in geeigneter Weise gespeichert.

Dieses Echtzeit-Auswerteverfahren an Bord des Flugkörpers hat den großen Vorteil, daß die sehr großen Original-Bilddaten-Mengen nicht erst auf einem besonderen Magnetband hoher Speicherdichte (sog. High Density Digital Tage, HDDT) gespeichert, auf computer compatible Magnetplatte und/oder Band umgesetzt und dann erst ausgewertet werden, sondern ohne diese aufwendige Zwischenspeicherung sämtlicher Daten die Endergebnisse sofort zur Verfügung stehen.

## Ansprüche

1. Stereophotogrammetrische Vorrichtung für Fluggeräte und Raumflugkörper zur Erzeugung der Orientierungsdaten der Vorrichtung, des Flugkurses des Vorrichtungsträgers und einer digitalen Geländedarstellung unter Verwendung von drei quer zur Flugrichtung angeordneten Photohalbleitersensorzeilen A, B und C (Fig. 1b) und zugeordneter Optik zur fortlaufenden Abtastung des überflogenen Geländes, dadurch gekennzeichnet, daß die Sensorzeilen A, B, C parallel im Abstand der Bild-Basis zueinander angeordnet sind, daß durch die fortlaufende Abtastung des überflogenen Geländes drei sich überdeckende Bildstreifen erzeugt werden, daß mittels Korrelation Bildpunkte eines neu anzuschließenden vorderen Zeilenbildes b) auf den Sensor-Zeilen B und C und korrespondierende Bildpunkte auf den Sensor-Zeilen A und B von zurückliegenden Zeilenbildern a), die etwa eine Basislänge zurückliegen, bestimmt werden, und daß durch den Schnitt homologer Strahlen die Geländekoordinaten (X, Y, Z) dieses Schnittpunktes und die Orientierung des neu anzuschliessenden vorderen Zeilenbildes b) berechenbar ist.

2. Vorrichtung nach Anspruch 1, dadurch gekennzeichnet, daß zur Korrelation korrespondierender Bildpunkte benachbarte Zeilenbilder benützt werden.

3. Vorrichtung nach Anspruch 1, dadurch gekennzeichnet, daß die Anfangsorientierung der Zeilenbilder über mindestens eine Basislänge durch räumliche Rückwärtseinschnitte der Zeilenbilder mit einem bekannten digital vorgegebenen Gelände berechenbar ist, wobei die Zuordnung der Bildpunkte zu den entsprechenden Geländepunkten durch Korrelation erfolgt.

4. Vorrichtung nach Anspruch 1, dadurch gekennzeichnet, daß die Bilddaten nur für etwa eine Basislänge zwischengespeichert und mit einem Prozeßrechner in Echtzeit auswertbar sind.

## Claims

1. Stereo-photogrammetrical device for flying apparatus and space vehicles for producing the orientation data of the device, the flight course of the device carrier and a digital terrain representation using three photo semiconductor sensor rows A, B and C (Fig. 1b) arranged transversely to the direction of flight and associated optical system for continuously scanning the overflown terrain, characterised in that the sensor rows A, B, C are arranged parallel to one another at the spacing of the picture base, in that through the continuous scanning of the overflown terrain three overlapping picture strips are produced, in that, by correlation, pixels of a newly-established front picture b) on the sensor rows B and C and corresponding pixels on the sensor rows A and B from rearwardly-lying row pictures a) which lie behind by about one base length, are determined, and in that by the intersection of homologous beams the terrain coordinates (X, Y, Z) of this point of intersection and the orientation of the newly-established front picture b) can be calculated.

2. Device according to claim 1, characterised in that adjacent row pictures are utilised for the correlation of corresponding pixels.

3. Device according to claim 1, characterised in that the initial orientation of the row pictures is calculable over at least one base length by spatial resections of the row pictures with a known digitally prescribed terrain, in which the association of the pixels with the corresponding terrain points is effected by correlation.

4. Device according to claim 1, characterised in that the picture data is intermediately stored only for about one base length and can be evaluated with a process computer in real time.

## Revendications

1. Dispositif stéréophotogrammétrique pour aéronefs et satellites fournissant des données sur

l'orientation du dispositif, sur la route suivie par le support du dispositif et une représentation numérique du terrain, avec emploi de trois lignes de capteur à semiconducteurs photoélectriques A, B et C (figure 1b) disposées transversalement au sens du vol et d'une optique y associée pour le balayage continu du terrain survolé, caractérisé par le fait que les lignes A, B, C du capteur sont disposées parallèlement à distance de la base de l'image les unes par rapport aux autres, que par balayage continu du terrain survolé, on produit trois bandes d'images en recouvrement, que par corrélation on détermine des points d'une image de lignes b) à raccorder et située en avant, sur les lignes B et C du capteur et des points correspondants situés sur les lignes A et B d'images de ligne a) se trouvant en arrière à une distance d'environ une longueur de base et que par l'intersection de rayons homologues, on peut calculer les coordonnées de terrain X, Y, Z de ce point d'intersection et l'orientation de l'image de ligne b) située en avant et à raccorder.

2. Dispositif selon la revendication 1, caractérisé par le fait que pour la corrélation de points d'image correspondants, on utilise des images de lignes voisines.

3. Dispositif selon la revendication 1, caractérisé par le fait que l'orientation initiale des images de lignes sur au moins une longueur de base peut être calculée par croisements spatiaux en arrière des images de lignes avec un terrain numériquement prédéterminé connu, la coordination des points d'image avec les points de terrain correspondants étant réalisée par corrélation.

4. Dispositif selon la revendication 1, caractérisé par le fait que les données des images ne sont mémorisées de façon intermédiaire que pour environ une longueur de base et peuvent être interprétées en temps réel avec un calculateur de processus.

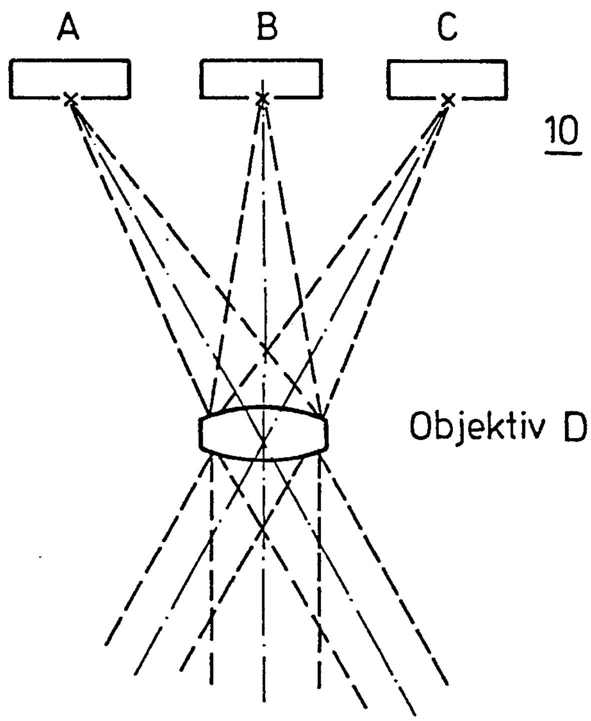


Fig. 1a

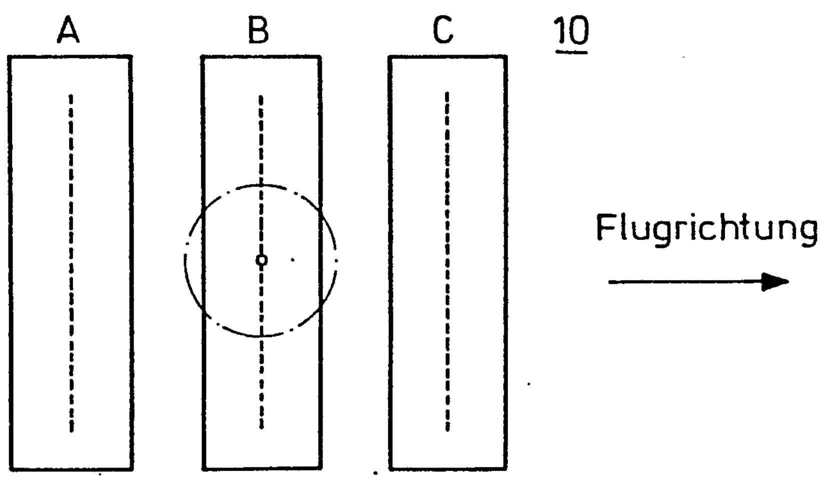


Fig. 1b

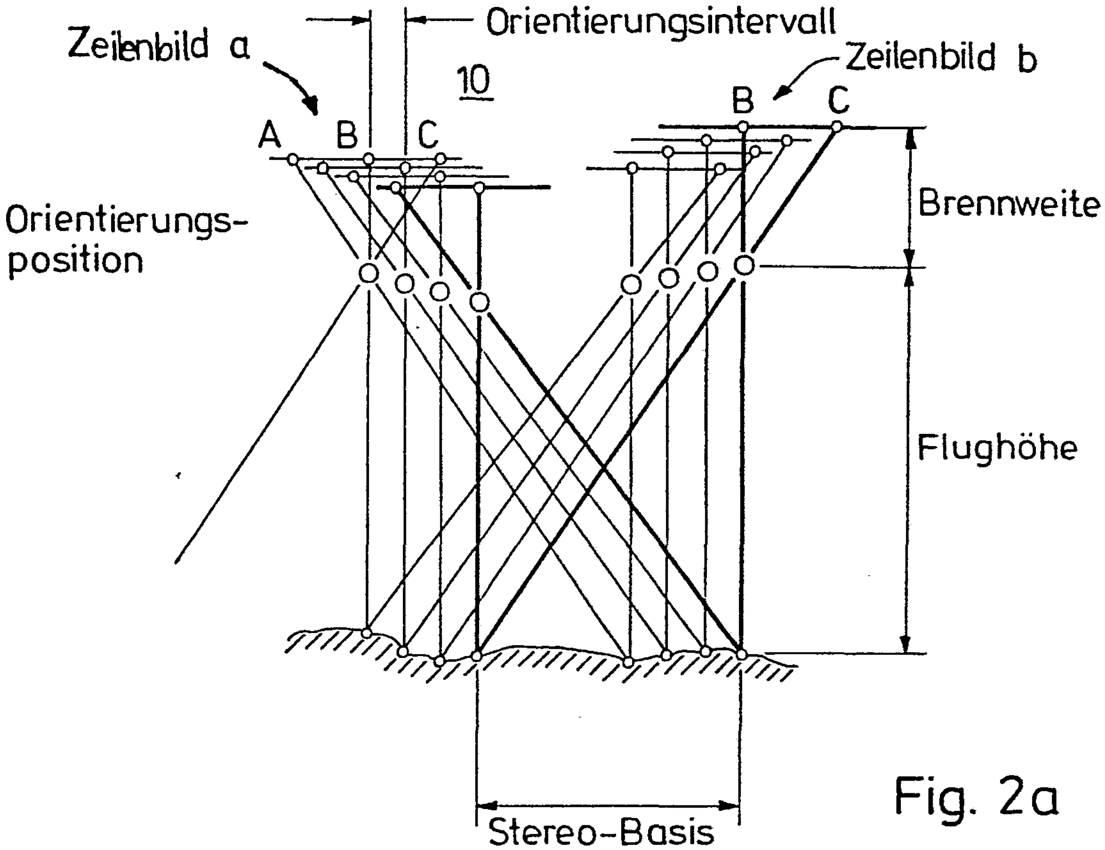
Orientierungsintervall
Zeilenbild a
10
Zeilenbild b
A
B
C
B
C
Brennweite
Orientierungs-
position
Flughöhe
Stereo-Basis

Fig. 2a

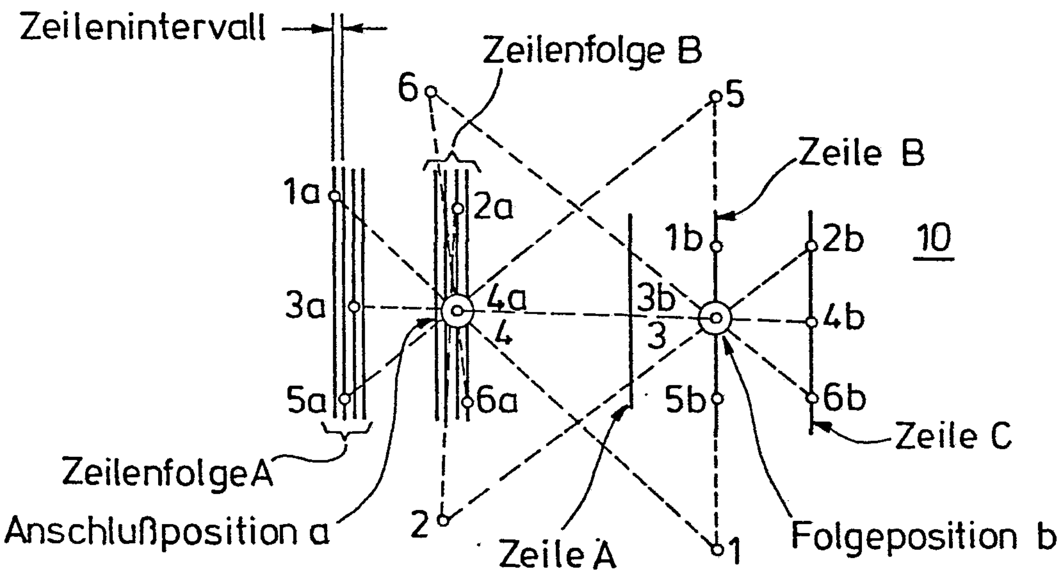
Zeilenintervall
Zeilenfolge B
6
5
Zeile B
1a
2a
1b
2b
10
3a
4a
4
3b
3
4b
5a
6a
5b
6b
Zeile C
ZeilenfolgeA
Anschlußposition a
2
Zeile A
1
Folgeposition b

Fig. 2b

Fig. 3

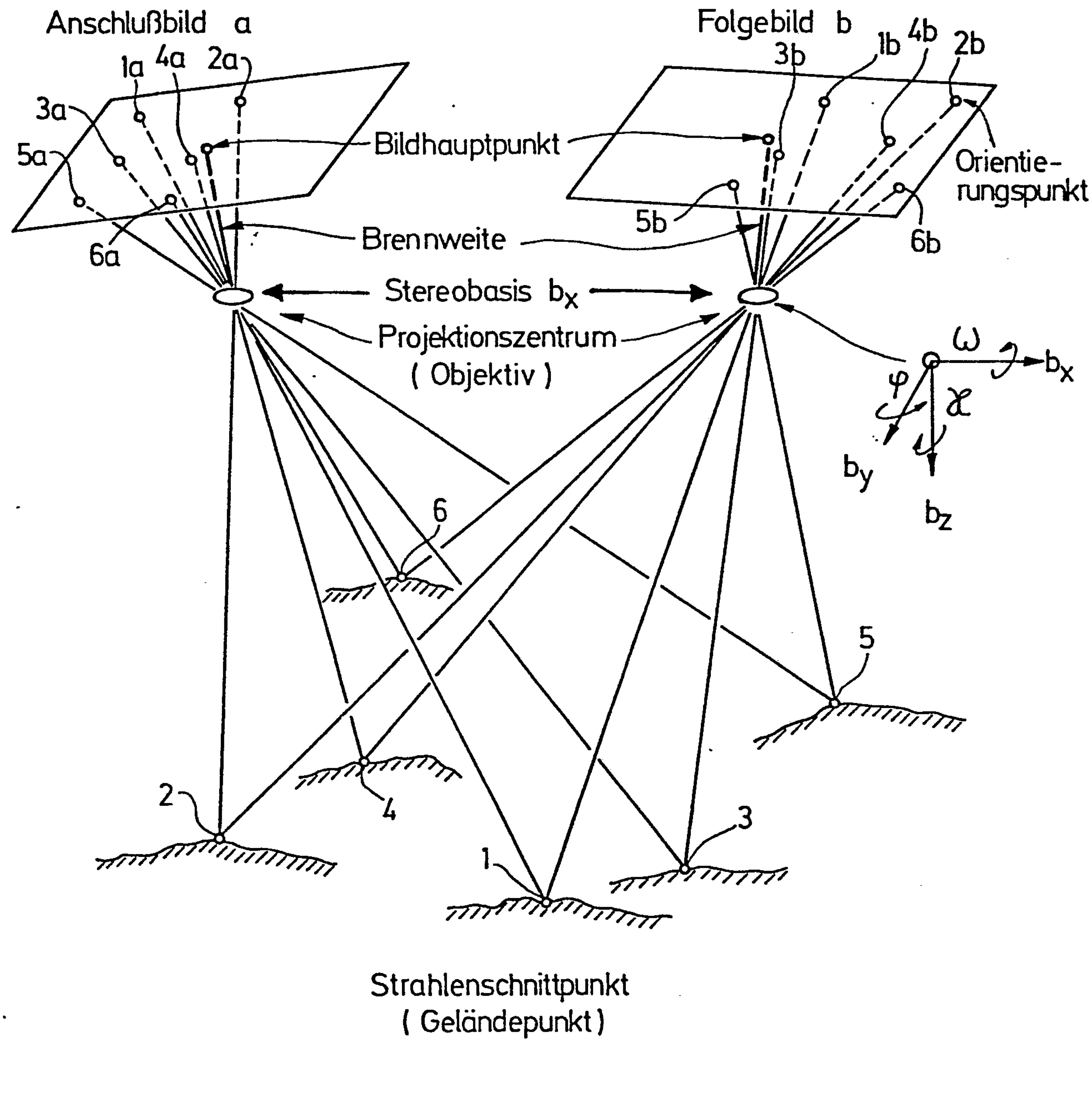
Anschlußbild a
1a
4a
2a
3a
5a
6a
Bildhauptpunkt
Brennweite
Folgebild b
3b
1b
4b
2b
Orientie-
rungspunkt
5b
6b
Stereobasis $b_x$
Projektionszentrum
( Objektiv )
ω
$b_x$
φ
χ
$b_y$
$b_z$
6
5
4
2
1
3
Strahlenschnittpunkt
( Geländepunkt )

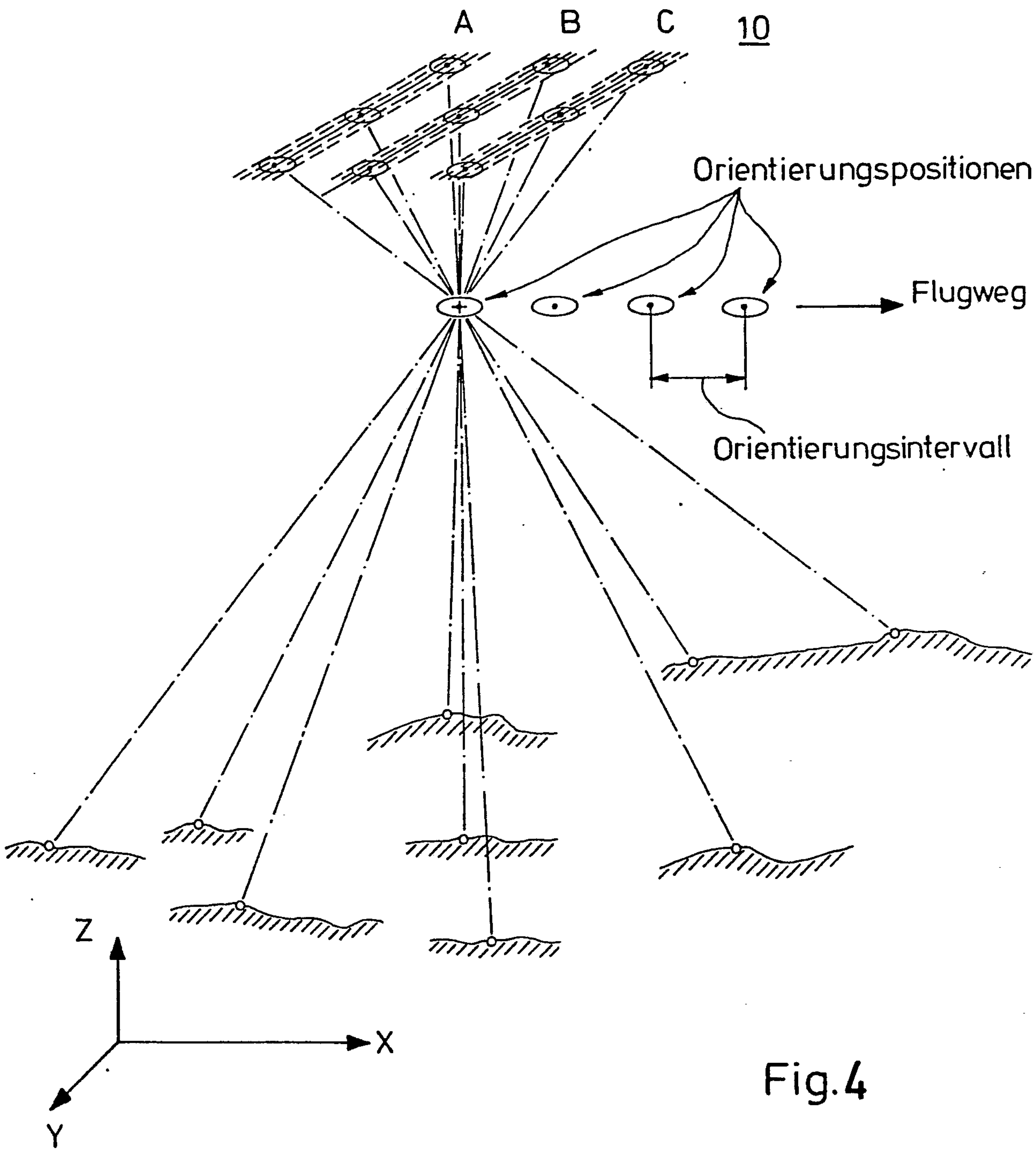
A
B
C
10
Orientierungspositionen
Flugweg
Orientierungsintervall
Z
X
Y

Fig. 4